# FASCICULE DE BREVET EUROPEEN

(11) **EP 0 561 715 B1**
(45) Date de publication et mention de la délivrance du brevet: **18.09.1996**
(21) Numéro de dépôt: 93400739.4
(22) Date de dépôt: 22.03.1993
(51) Int. Cl.: F16B 37/06, F16B 33/00

(54) **Ecrou autosertisseur et autopoinçonneur et vis**
Selbstfassende und selbstlochende Mutter und Schraube
Self-setting and self-piercing nut and screw

(30) Priorité: 20.03.1992 FR 9203409
(43) Date de publication de la demande: 22.09.1993
(73) Titulaire: FORMER, F-90101 Delle Cédex (FR)
(72) Inventeur: Luczak, Bernard, F-59740 Solre-le-Chateau (FR)
(74) Mandataire: Phélip, Bruno

(56) Documents cités:
- EP-A- 0 274 922
- WO-A-91/01691
- FR-A- 2 598 189
- GB-A- 1 468 150
- US-A- 3 127 919
- US-A- 3 253 631
- US-A- 3 927 465
- US-A- 4 637 766

## Description

La présente invention appartient au domaine de la mécanique et a pour objet un écrou autosertisseur possédant la propriété d'être également autopoinçonneur. Elle concerne également une vis destinée à être fixée par sertissage sur un support.

De façon classique, de tels écrous présentent un corps percé d'un trou taraudé ou destiné à être taraudé, par exemple au moyen d'une vis autotaraudeuse et, en saillie sur ce corps, une tête perforatrice formant poinçon.

Les écrous autopoinçonneurs ont la particularité de poinçonner, grâce à des moyens de perforation, une tôle ou tout autre matériau servant de support. Les écrous considérés ici présentent de plus des moyens pour se sertir eux-mêmes, les mouvements de rotation et de déplacement par rapport à leur axe étant supprimés. Ainsi, une fois placés sur leur support, ces écrous se trouvent enchâssés dans celui-ci.

Ces écrous sont généralement utilisés dans l'industrie automobile, car ils permettent d'éviter les aléas du soudage et de mettre en oeuvre des matériaux non soudables ou encore des matériaux soudables mais protégés ou revêtus.

Les deux principales qualités requises pour ce type de produit sont d'une part, la résistance au couple de dessertissage, c'est-à-dire un mouvement de rotation par rapport au support et d'autre part, la résistance à la force de dessertissage, c'est-à-dire un mouvement de désencastrement axial de l'écrou par rapport au support.

Certains types d'écrous connus présentent une tête perforatrice de section carrée mais ils se sont révélés peu fiables. C'est pourquoi, on préfère les écrous dont la tête perforatrice est ronde.

On connaît déjà des écrous dont la tête perforatrice n'est pas de section carrée.

Le brevet GB-A-1 468 150 décrit un écrou autopoinçonneur autosertisseur comprenant un corps percé d'un trou taraudé et une tête de forme tronconique.

Cet écrou ne présente pas de jupe entourant la tête. La quantité de tôle intervenant lors du sertissage n'est donc pas déterminée. Ceci a pour conséquence que la résistance au dessertissage axial n'est pas bonne.

Le brevet US-A-4,637,766 décrit un écrou autopoinçonneur autosertisseur du même type que celui décrit dans le brevet GB-A-1 468 150 et dont la tête perforatrice est ronde. Il présente les mêmes inconvénients. De plus, il faut frapper la tôle avec l'écrou pour obtenir des résultats.

Le même type d'inconvénients apparaît avec des vis ne comportant pas de jupe périphérique.

Ainsi, le brevet US-A-3,127,919 décrit une vis comportant, au raccordement de la tête et de la tige filetée, deux parties rentrantes successives. Lorsque la vis pénètre dans la tôle, la matière remplit complètement la première partie rentrante.

Cette vis ne comporte pas de jupe périphérique et présente donc les mêmes inconvénients que les brevets GB-A-1 468 150 et US-4,637,666.

On connaît également par le brevet US-A-3 927 463 un écrou autopoinçonneur autosertisseur présentant un corps percé d'un trou taraudé et en saillie sur le corps, une tête perforatrice entourée d'une jupe continue, la tête définissant avec la jupe une gorge, le fond de la gorge présentant des évidements situés au pied de la tête. Ces évidements sont conçus pour recevoir l'extrémité inférieure des outils de percement.

Il n'y a pas d'encastrement de tôle sous la tête, mais uniquement sous la jupe périphérique. Ceci présente des inconvénients dans la mesure où le produit peut se dessertir axialement, du fait de l'absence de blocage contre la tête.

C'est pourquoi, le brevet EP-0 274 922 au nom de la Demanderesse décrit un écrou autosertisseur autopoinçonneur comprenant un corps percé d'un trou taraudé et, en saillie sur ce corps, une tête perforatrice ronde formant poinçon, entourée d'un rebord en forme de jupe continue. Le rebord, de hauteur inférieure à celle du poinçon, présente une forme polygonale et le poinçon est évasé extérieurement par rapport au trou pour déterminer sur toute la partie externe une partie évasée rentrante.

On peut également citer le brevet FR-2 598 189 qui décrit un élément de fixation comprenant un fût cylindrique et, en prolongement, une tête élargie présentant un épaulement destiné à s'appliquer contre la tôle ainsi que plusieurs saillies réparties sur l'épaulement.

Les saillies sont prévues pour assurer un verrouillage de l'élément lorsque celui-ci est serti, en l'empêchant de tourner par rapport à la tôle.

Le dessertissage axial de l'écrou est empêché par le remplissage de l'évidement situé au pied du fût cylindrique. Ce résultat n'est obtenu que si les espaces entre les saillies sont complètement remplis (ou si les saillies pénètrent totalement dans la tôle).

On peut de plus noter que le déplacement de la tôle s'effectue latéralement et donc difficilement, ce qui ne donne pas de bons résultats.

Le brevet US-A-3 253 631 décrit un écrou autosertisseur autopoinçonneur comprenant un corps percé d'un trou taraudé et en saillie, une tête entourée d'un rebord de hauteur inférieure à celle de la tête. La tête présente une partie rentrante pour l'encastrement de la tôle. Entre la tête et la jupe sont prévus des reliefs en creux qui sont destinés à être remplis par de la matière pour s'opposer au dessertissage en rotation de l'écrou.

Ces écrous apportent satisfaction mais l'on cherche à simplifier leur fabrication en s'affranchissant de certaines tolérances.

Pour pouvoir sertir un écrou sur une tôle, on le place sur une table de presse, l'élément presseur de la presse étant alors en position haute. Afin d'obtenir le sertissage, on fait passer l'élément presseur en position basse. On comprend que, dans cette position basse, la distance entre la table et l'élément presseur est réglée pour une tôle et un type d'écrou donnés. Cette distance n'est modifiée que si l'on change la tôle ou le type d'écrou. On définit ici par "cote utile de sertissage", la valeur qui correspond à la différence entre la hauteur de l'écrou posé et la hauteur de la jupe périphérique. La cote utile de sertissage est donc la distance entre la face de l'écrou opposée à la tête et la partie plane de l'écrou où s'effectue le sertissage. On comprend que pour qu'un sertissage puisse intervenir, l'addition des valeurs de la cote utile de sertissage et de l'épaisseur de la tôle doit être supérieure à la valeur de la distance fixée entre la table et l'élément presseur. De plus, pour éviter toute détérioration du taraudage de l'écrou, l'addition de ces deux valeurs doit être inférieure à une valeur prédéterminée.

Il est donc tout à fait indispensable de respecter la tolérance sur la cote utile de sertissage. Cependant, la hauteur de l'écrou posé et la hauteur de la jupe périphérique sont définies elles aussi avec une certaine tolérance. La valeur de la cote utile de sertissage étant la différence entre ces deux hauteurs, les tolérances correspondant à celles-ci se cumulent et l'on comprend qu'il est alors difficile de respecter la tolérance sur la cote utile de sertissage.

De plus, le support sur lequel l'écrou est serti présente également une tolérance de fabrication. Ceci peut entraîner des défauts lors du sertissage. En effet, il arrive que l'écrou ne soit serti que de façon temporaire ou encore que l'écrou soit bien serti mais que son taraudage soit détérioré par écrasement. Il est dans ce dernier cas impossible de fixer une vis sur cet écrou.

Ainsi, il est apparu nécessaire de concevoir un écrou pour la fabrication duquel le respect de la tolérance sur la cote utile de sertissage n'était plus crucial, cet écrou pouvant de plus être serti de façon appropriée, quelle que soit la tolérance de fabrication du support sur lequel il est serti.

L'invention est relative à un écrou autosertisseur autopoinçonneur destiné à être fixé par sertissage sur un support au moyen d'une machine appropriée, correspondant à la revendication 1. Ledit écrou comprend inter alea un corps percé d'un trou taraudé ou destiné à être taraudé et, en saillie sur ce corps, une tête perforatrice formant poinçon, entourée d'un rebord en forme de jupe continue et de hauteur inférieure à celle du poinçon, ladite tête présentant des moyens pour l'encastrement d'une partie du support et définissant avec ladite jupe une gorge dont le fond présente un relief en creux, la quantité de matière du support pénétrant dans le relief en creux dépendant des valeurs de la cote utile de sertissage de l'écrou et de l'épaisseur du support, pour un réglage prédéterminé de ladite machine.

Selon une première variante de réalisation de l'invention, le relief prend la forme d'une denture.

De façon préférée, ladite denture forme une épicycloïde s'opposant au dessertissage de l'écrou.

Selon une deuxième variante, le relief est constitué par des cavités régulièrement réparties.

Selon une troisième variante, le relief est constitué par une gorge circulaire continue. Cette gorge est ou non centrée sur l'axe de l'écrou et elle est de section continue ou variable. Elle permet d'assurer l'étanchéité du sertissage sans élément complémentaire.

De façon préférée, la tête perforatrice est ronde.

Selon un premier mode de réalisation, la jupe présente une forme polygonale.

Selon un deuxième mode de réalisation, la jupe présente une forme ronde.

Dans une première forme de réalisation de l'écrou, les moyens pour l'encastrement sont constitués par la partie évasée rentrante que présente le poinçon sur toute sa partie extérieure, du fait de son évasement extérieur par rapport au trou.

Dans une deuxième forme de réalisation, les moyens pour l'encastrement sont constitués par une encoche circulaire située à la base du poinçon.

De façon préférée, la jupe présente, sur sa face interne, une partie évasée rentrante formant un angle obtus avec l'axe de l'écrou.

L'invention concerne également une vis destinée à être fixée par sertissage sur un support au moyen d'une machine appropriée, correspondant à la revendication 14. Ladite vis comporte inter alea un corps et, en saillie sur ce corps, une tête entourée d'un rebord en forme de jupe continue, de hauteur inférieure à celle de la tête, ainsi qu'une tige, ladite tête présentant des moyens pour l'encastrement du support et définissant avec ladite jupe, une gorge dont le fond présente un relief en creux, la quantité de matière du support pénétrant dans le relief en creux dépendant des valeurs de la cote utile de sertissage de la vis et de l'épaisseur du support, pour un réglage prédéterminé de ladite machine.

De façon préférée, ledits moyens pour l'encastrement sont constitués par une première partie rentrante prévue au raccordement de la tête et du corps.

Selon une première variante, ladite jupe continue présente une partie rentrante faisant un angle obtus avec l'axe de la vis.

Dans un premier mode de réalisation, la tige de la vis est dans le prolongement de la tête.

Selon une variante, les moyens pour l'encastrement comportent une deuxième partie rentrante dans le prolongement de la première.

Dans un deuxième mode de réalisation, la tige est à l'opposé de la tête, par rapport audit corps.

L'invention sera mieux comprise et les buts, avantages et caractéristiques de celle-ci apparaîtront plus clairement à la lecture de la description qui suit à laquelle sont annexés des dessins sur lesquels :
- la figure 1 est une vue de dessus d'un premier mode de réalisation d'un écrou selon l'invention,
- la figure 2 est une coupe suivant la ligne A-A de la figure 1,
- les figures 3a à 3c illustrent, en trois étapes, la fixation de l'écrou des figures 1 et 2 sur un support (tôle mince),
- la figure 4 est une vue de dessus d'un deuxième mode de réalisation de l'invention, et
- la figure 5 est une coupe suivant la ligne B-B de la figure 4,
- la figure 6 est une coupe d'un troisième mode de réalisation de l'écrou,
- la figure 7 est une vue en coupe selon l'axe de la vis, d'un premier mode de réalisation d'une vis selon l'invention,
- la figure 8 est une vue en coupe selon l'axe de la vis, d'un deuxième mode de réalisation d'une vis selon l'invention,
- la figure 9 est une demi-vue en coupe selon l'axe de la vis, d'un troisième mode de réalisation de la vis selon l'invention,
- la figure 10 est une vue de dessus d'un quatrième mode de réalisation de l'écrou,
- la figure 11 est une vue de dessus d'un cinquième mode de réalisation de l'écrou, et
- la figure 12 est une vue de dessus d'un sixième mode de réalisation de l'écrou.

Les éléments communs aux différents figures seront désignés par les mêmes références.

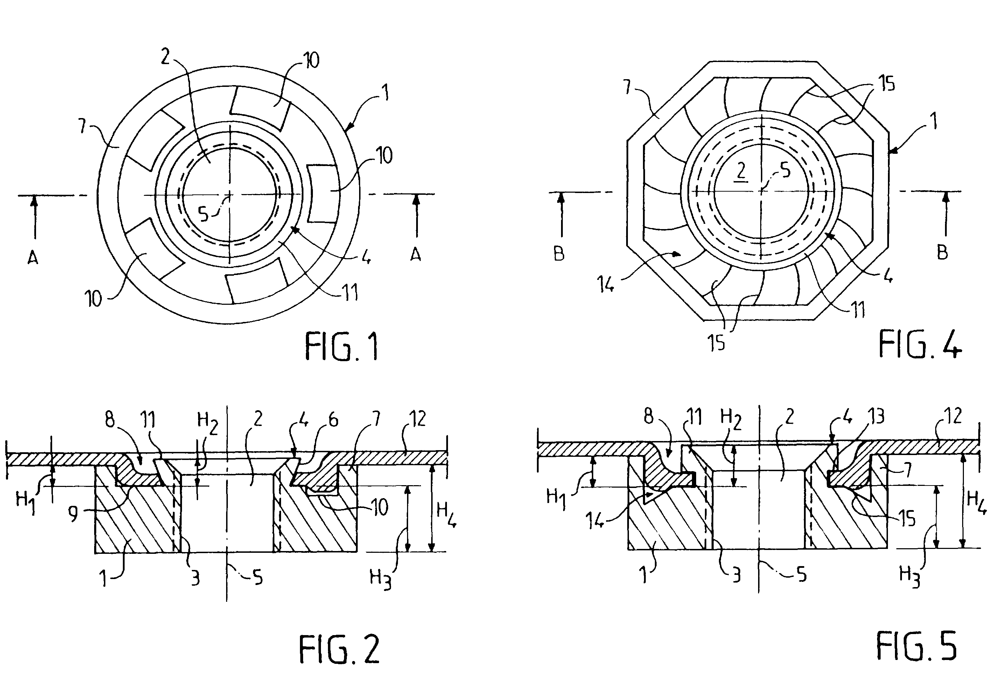

En référence aux figures 1 et 2, l'écrou comprend un corps 1 au centre duquel un trou 2 est taraudé. Le pas de vis 3 créé à l'intérieur du trou 2 permet la fixation de l'écrou avec un boulon de filetage complémentaire.

Dans une variante, le trou 2 peut être lisse et taraudé, lors du montage final, par une vis autotaraudeuse.

Le corps 1 de l'écrou présente un élément 4 dont la partie extrême 11 forme arête de coupe et qui constitue la tête perforatrice de l'écrou. Cette tête perforatrice ronde 4 est située à la périphérie du trou 2 alésé dans l'écrou et possède le même axe 5 que le corps 1. Elle est évasée extérieurement par rapport au trou 2 pour permettre l'encastrement de matière lors du sertissage et ainsi éliminer les mouvements axiaux de l'écrou fixé sur son support. La partie évasée de la tête 4 porte la référence 6.

Egalement sur la face de l'écrou destinée à être fixée sur un support tel qu'une tôle, mais à l'extérieur de la tête perforatrice 4, le corps 1 est prolongé de façon à former une jupe 7 continue tout autour de l'élément perforateur 4. La jupe 7 est placée à une distance suffisante de l'élément perforateur 4 pour permettre l'encastrement de matériau de support dans la gorge 8, lors du sertissage. Cette jupe continue 7, de forme circulaire, assure le sertissage du support. La hauteur H1 de la jupe est nécessairement inférieure à celle H2 de la tête perforatrice 4, de façon à ce que cette dernière joue effectivement le rôle de perceuse.

Le fond 9 de la gorge 8 comporte une pluralité de cavités 10 régulièrement réparties.

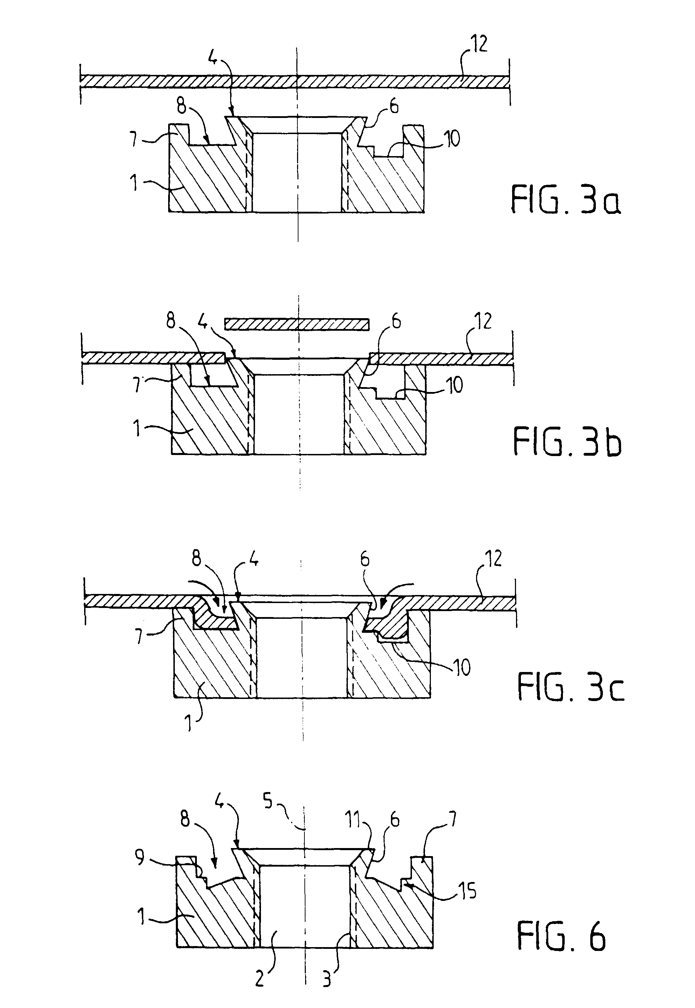

Les figures 3a à 3c montrent schématiquement, en coupe et à échelle agrandie, trois étapes de fixation de l'écrou sur un support 12, par exemple une tôle mince. La matrice de la presse de sertissage conduit d'abord l'écrou à perforer la tôle 12. On comprend que la jupe périphérique 7 et la tête 4 délimitent une masse de matière déterminée. Après perforation, la matrice force la tôle 12 à s'engager dans la gorge 8. Simultanément, elle écrase et allonge la tôle 12. La jupe 7 permet un phénomène de fluage qui pousse cette tôle 12 sous la partie évasée 6 de la tête perforatrice ronde et des excédents de tôle dans les cavités 10. On peut noter que du fait de la continuité de la jupe 7, le phénomène de fluage de la tôle mince 12 s'effectue en tous points à partir de cette jupe et assure le glissement circulaire complet d'une partie de la tôle 12 sous la partie évasée 6 de la tête 4.

Ainsi, sous l'effort de sertissage, la tôle 12 flue sous la partie évasée 6 du poinçon perceur et pénètre également de façon plus ou moins importante dans les cavités 10.

On comprend que les cavités, du fait de leur remplissage au moins partiel par une partie de la tôle 12, réalisent un système anti-rotation qui s'oppose aux éventuels mouvements de rotation de l'écrou par rapport à son axe 5. Un tel système anti-rotation est nécessaire lorsque la jupe périphérique de l'écrou est ronde comme c'est le cas dans le premier mode de réalisation décrit en référence aux figures 1 et 2. Un tel système n'est pas indispensable pour des écrous dont la jupe périphérique présente une forme polygonale. En effet, pour ces écrous, c'est la jupe elle-même qui, par sa forme, s'oppose à un éventuel couple de dessertissage.

Cependant, les écrous ronds présentent de nombreux avantages par rapport aux écrous de forme polygonale et il peut être intéressant de les utiliser. Ainsi, les écrous ronds sont des pièces plus légères, d'un coût unitaire plus faible. Ils présentent une meilleure résistance au dessertissage axial, du fait du fluage identique de la matière de la tôle sous toute la périphérie du poinçon perceur. L'écrou est plus facile à positionner et la tête de pose est facilement intégrée dans l'outillage d'emboutissage du fait qu'elle n'a pas à être orientée par rapport à la matrice. Enfin, lors de la fabrication de l'écrou, le contrôle de la concentricité du poinçon perceur par rapport à l'extérieur de la jupe périphérique est beaucoup plus simple à réaliser lorsque la jupe est circulaire au lieu d'être polygonale.

Enfin, la présence de ces cavités 10 permet, lors de la fabrication de l'écrou, de s'affranchir de la tolérance sur la cote utile de sertissage ainsi que de la tolérance sur l'épaisseur de la tôle constituant le support.

La cote utile de sertissage correspond à la hauteur H3 indiquée sur la figure 2. Comme expliqué précédemment, cette hauteur H3 correspond à la différence entre la hauteur H4 totale de l'écrou posé et la hauteur H1 de la jupe périphérique 7. Des tolérances sont déterminées pour chacune des valeurs de H1 et H4. En réglant la distance entre la table de presse et l'élément presseur de telle sorte qu'elle soit inférieure à la somme de la valeur minimale de la cote utile de sertissage et de l'épaisseur de la tôle, la valeur minimale de la cote utile de sertissage correspondant à la différence des valeurs minimales de H1 et H4, en fonction de leurs tolérances, on comprend que, quel que soit l'écrou, un sertissage sera obtenu par encastrement de matière sous la tête 4 et l'on obtiendra un excédent de matière dans les cavités 10 plus ou moins important.

Ainsi, lors de la fabrication des écrous, il ne sera plus nécessaire de respecter de façon précise la tolérance de la cote utile de sertissage ou hauteur H3. Il suffira de respecter les tolérances sur la hauteur H4 de l'écrou posé et sur la hauteur H1 de la jupe périphérique. On pourra donc obtenir un bon sertissage de plusieurs écrous, en simultané ou successivement, sans tolérances précises de la cote utile de sertissage.

De plus, la qualité du sertissage ne dépend plus des tolérances sur l'épaisseur de la tôle constituant le support.

On peut noter que sur les figures 1 et 2, les cavités 10 ont été représentées dans le prolongement de la jupe périphérique 7. Ce mode de réalisation n'est pas limitatif et l'on peut envisager également de prévoir ces cavités dans le fond 9 de la gorge 8, à une distance déterminée de la jupe 7.

Les figures 4 et 5 illustrent un deuxième mode de réalisation de l'écrou conforme à l'invention.

Dans ce mode de réalisation, la tête perforatrice 4 présente une forme générale cylindrique. Elle comporte sur toute sa périphérie et au niveau du fond 9 de la gorge, un évidement 13. Comme la partie évasée 6 de la tête du premier mode de réalisation de l'écrou, cet évidement 13 assure un sertissage complet et efficace du fait du glissement d'une partie de la tôle à l'intérieur de celui-ci.

La jupe 7 qui entoure la tête 4 est, dans ce deuxième mode de réalisation, de forme polygonale. Comme précédemment, elle présente une hauteur H1 inférieure à celle H2 de la tête perforatrice 4 de façon à ce que cette dernière joue effectivement le rôle de perceuse. La section de cette jupe 7 peut être quelconque : carrée, rectangulaire ou encore demi-sphérique.

Dans le fond 9 de la gorge 8 est prévue une denture

14. Dans cette forme de réalisation, les dents 15 forment une épicycloïde.

Le sertissage de l'écrou dans la tôle 12 s'effectue comme cela a été décrit en référence aux figures 3a à 3c. La tête 4 et la jupe 7 déterminent une quantité donnée de matière. La jupe 7 permet un phénomène de fluage ou de glissement qui pousse la tôle 12 dans l'évidement 13 de la tête 14. De plus, la presse est réglée comme précédemment, de façon à ce que les dents 15 soient au moins partiellement remplies par de la tôle.

On comprend que le sertissage de l'écrou dans la tôle 12 est obtenu par le glissement circulaire complet d'une partie de la tôle 12 dans l'évidement 13, ce qui s'oppose à un éventuel mouvement de désencastrement axial et de plus, par la forme polygonale de la jupe 7 qui empêche les éventuels mouvements de rotation de l'écrou.

Dans cette forme de réalisation, les dents 15 dans lesquelles pénètre une partie de la tôle 12, contribuent à la résistance de l'écrou au couple de dessertissage et a, comme pour le premier mode de réalisation, pour objet de pouvoir s'affranchir des tolérances sur la cote utile de sertissage, c'est-à-dire la hauteur H3.

On comprend que les dents 15 doivent être orientées de manière appropriée pour s'opposer au couple de dessertissage, en fonction du pas de vis 3. On peut également prévoir des dents placées dans des directions alternées, ce qui évite de tenir compte du pas.

Les caractéristiques concernant la tête perforatrice, la jupe polygonale et le relief donné au fond 9 de la gorge, peuvent être utilisées indépendamment pour d'autres formes de réalisation de l'écrou. Ainsi, par exemple, on peut envisager de fabriquer un écrou dont la jupe est ronde, la tête perforatrice comportant un évidement 13 et une denture 14 étant prévue dans le fond 9 de la gorge.

Enfin, on peut envisager des moyens pour l'encastrement d'une partie de la tôle sous la tête perforatrice 4 qui soient différents de la partie évasée 6 ou de l'évidement 13. On peut également prévoir un relief, dans le fond 9 de la gorge 8, qui présente une forme différente des cavités 10 ou de la denture 14.

Dans un troisième mode de réalisation de l'écrou selon l'invention illustré à la figure 6, c'est une denture 14 qui est prévue dans le fond 9 de la gorge 8 tandis que la tête perforatrice 4 est évasée extérieurement par rapport au trou 2. Contrairement au deuxième mode de réalisation représenté à la figure 5, les dents 15 ne sont pas directement dans le prolongement de la jupe 7 mais sont légèrement décalées par rapport à celle-ci vers l'axe 5 de l'écrou. Ce mode de réalisation des dentures peut être appliqué à tous les écrous selon l'invention.

Dans tous les cas, le relief en creux est situé dans le fond de la gorge 8. Ainsi, l'écoulement de la tôle formant le support sur lequel l'écrou est serti, s'effectue selon la force de poussée exercée par la machine à sertir. Cet écoulement est donc facilement réalisé.

L'invention ne se limite pas au détail des modes de réalisation qui n'ont été décrits qu'à titre d'exemples, d'autres variantes pouvant être réalisées, sans sortir du cadre de protection défini par les revendications.

Ainsi, la jupe 7 peut présenter, sur sa face interne, un angle obtus par rapport à l'axe 5 de l'écrou, c'est-à-dire une partie évasée rentrante, de façon à permettre, comme pour la tête perforatrice, un encastrement d'une partie du matériau de support.

L'invention a été décrite en référence à un écrou dont la tête perforatrice est ronde mais elle peut aussi être appliquée à un écrou dont la tête est polygonale.

La présente invention résout les problèmes posés par le respect de la tolérance sur la cote utile de sertissage et par la tolérance sur l'épaisseur du support sur lequel l'écrou est serti, tout en mettant à profit les avantages présentés par un élément perforateur rond et en procurant une résistance élevée à la fois au couple de dessertissage et à la force de dessertissage. On obtient ainsi un écrou autosertisseur autopoinçonneur de construction simple permettant l'utilisation de matériaux non soudables ou encore soudables mais revêtus ou protégés, et de bonne résistance aux vibrations.

Les caractéristiques de l'écrou selon l'invention peuvent également s'appliquer à une vis à sertir constituée classiquement d'un corps et d'une tige filetée.

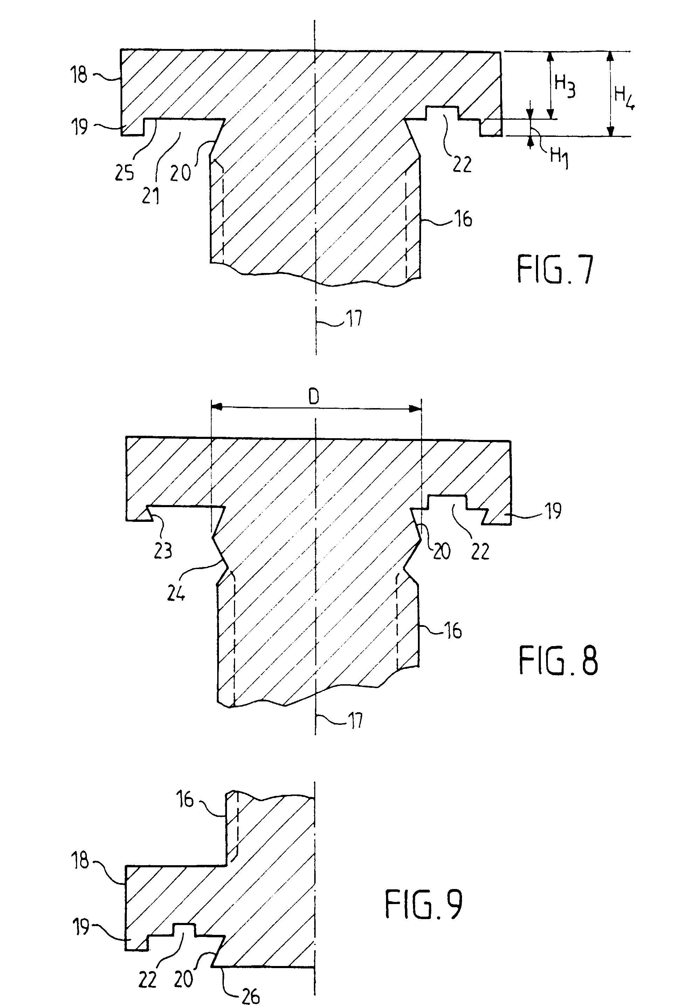

En référence à la figure 7, la vis comprend une tige filetée 16 d'axe 17 et un corps 18.

Le corps 18 comporte un rebord en forme de jupe continue 19 entourant la tige 16.

La tige 16 présente, au niveau de son raccordement avec le corps 18, une première partie rentrante 20 pour l'encastrement de la tôle.

La tige filetée 16 et la jupe continue 19 définissent une gorge 21, le fond 25 de la gorge présentant un relief en creux. Celui-ci peut prendre la forme de cavités 22 régulièrement réparties comme celles illustrées aux figures 1 et 5 pour un écrou. Ces cavités peuvent être placées à une distance déterminée de la jupe 12 ou encore dans le prolongement de la jupe périphérique 19. Le relief en creux peut également être constitué par une denture comme celle illustrée aux figures 4 et 5.

Comme pour un écrou, on définit par H₄ la hauteur de la vis posée, par H₁, la hauteur de la jupe périphérique 19 et par H₃ la cote utile de sertissage. La hauteur H₃ correspond à la différence entre la hauteur H₄ de la vis posée et la hauteur H₁ de la jupe périphérique.

La présence des cavités 22 dans le fond de la gorge 21 permet d'obtenir un bon sertissage de la vis, sans tolérance précise de la cote utile de sertissage, ce sertissage ne dépendant pas des tolérances sur l'épaisseur de la tôle constituant le support.

Comme illustré sur la figure 8, la vis peut comporter une jupe continue 19 qui présente un angle obtus par rapport à l'axe 17 et donc une partie rentrante 23. Elle permet un encastrement d'une partie du matériau de support, comme la partie rentrante 20 prévue sur la tige filetée 16.

La présence de cette partie rentrante 23 sur la jupe 19 permet d'améliorer la résistance du dessertissage axial de l'écrou.

La vis peut également présenter une deuxième partie rentrante 24 dans le prolongement de la première 20.

La valeur du diamètre D au niveau du raccordement entre les deux parties rentrantes 20 et 24 est choisie pour éviter la détérioration de la vis au cours de son passage au travers de la tôle.

De plus, la position des surfaces de raccordement entre la deuxième partie rentrante 24 et la tige filetée 16 et entre les deux parties rentrantes 20 et 24 est choisie pour permettre le serrage de la tôle et non le blocage de l'écrou sur la vis.

Dans ces conditions, la présence de cette deuxième partie rentrante 24 permet à l'écrou de se serrer sur la tôle sertie.

En référence à la figure 9, la vis comporte une tête 26 qui est entourée par le rebord 19. La tige 16 n'est pas, comme dans le mode de réalisation selon les figures 7 et 8, dans le prolongement de la tête 26 mais à l'opposé de celle-ci par rapport au corps 18.

La hauteur du rebord 19 est inférieure à celle de la tête 26 qui présente une partie rentrante 20. Toutes les variantes de réalisation qui ont été décrites en référence aux figures 7 et 8 sont également applicables à la vis illustrée à la figure 9.

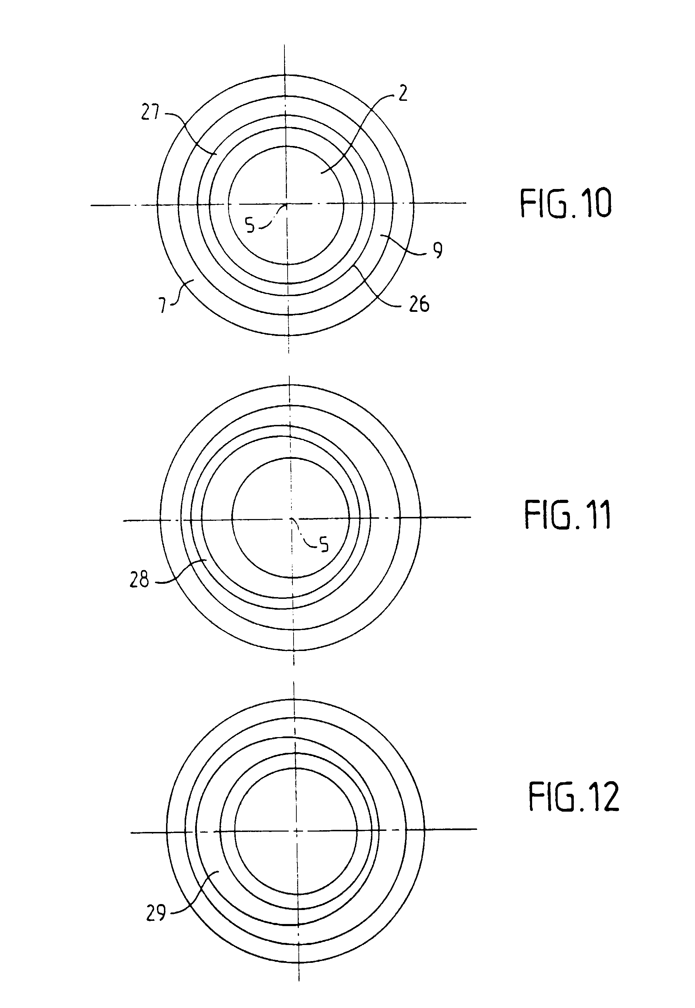

En référence aux figures 10 à 12, vont être décrites des variantes de réalisation du relief en creux dans le fond 9 de la gorge 8 de l'écrou selon l'invention.

La figure 10 montre une cavité 27 formée par une gorge circulaire continue de section constante et centrée sur l'axe 5 de l'écrou. Cette gorge présente l'avantage, par rapport aux cavités 10 et à la denture 14 décrites précédemment, d'assurer l'étanchéité du sertissage aux gaz et aux liquides, sans élément complémentaire.

La figure 11 montre une variante de réalisation dans laquelle la gorge 28 est excentrée par rapport à l'axe 5 de l'écrou et de section constante.

Cette gorge 28 permet également d'assurer l'étanchéité sans élément additionnel et aussi d'accroître la résistance au couple de dessertissage.

Une autre variante est illustrée à la figure 12 qui montre une gorge 29, excentrée par rapport à l'axe 5 de l'écrou et de section non constante.

Cette gorge 29 assure l'étanchéité sans élément additionnel tout en augmentant encore la résistance au couple de dessertissage par rapport à la variante de la figure 11.

La section de la gorge 27, 28 ou 29 peut être de forme quelconque : carrée, rectangulaire...

Ces variantes de réalisation sont également applicables à une vis telle que décrite en référence aux figures 7 à 9.

L'invention s'applique de manière très intéressante à la fixation de tôles métalliques, mais elle peut également être utilisée pour la fixation de matières en plaques non métalliques de composites présentant une certaine ductilité.

Les signes de référence insérés après les caractéristiques techniques mentionnées dans les revendications ont pour seul but de faciliter la compréhension de ces dernières et n'en limitent aucunement la portée.

## Revendications

1. Ecrou autosertisseur autopoinçonneur destiné à être fixé par sertissage sur un support (12), ledit écrou comprenant un corps (1) percé d'un trou (2) taraudé ou destiné à être taraudé et, en saillie sur ce corps (1), une tête perforatrice (4) formant poinçon, entourée d'un rebord en forme de jupe continue (7) et de hauteur inférieure à celle du poinçon, les tolérances sur la hauteur (H1) de ladite jupe (7) et sur la hauteur (H4) de l'écrou posé étant seules respectées, ladite tête (4) présentant des moyens (6, 13) pour l'encastrement d'une partie du support (12) et définissant avec ladite jupe (7) une gorge (8) dont le fond (9) présente un relief en creux (10, 14) qui permet de s'affranchir du respect de la tolérance sur la cote utile de sertissage.

2. Ecrou selon la revendication 1, caractérisé en ce que ledit relief prend la forme d'une denture (14).

3. Ecrou selon la revendication 2, caractérisé en ce que ladite denture (14) forme une épicycloïde s'opposant au dessertissage en rotation de l'écrou.

4. Ecrou selon la revendication 1 caractérisé en ce que ledit relief est constitué par des cavités (10) régulièrement réparties.

5. Ecrou selon la revendication 1 caractérisé en ce que ledit relief est constitué par une gorge circulaire continue (27).

6. Ecrou selon la revendication 5 caractérisé en ce que la gorge circulaire (28) est excentrée par rapport à l'axe (5) de l'écrou.

7. Ecrou selon les revendications 5 ou 6 caractérisé en ce que la gorge circulaire (29) est de section variable.

8. Ecrou selon l'une des revendications 1 à 7, caractérisé en ce que ladite tête (4) est ronde.

9. Ecrou selon l'une des revendications 1 à 8, caractérisé en ce que ladite jupe (7) présente une forme polygonale.

10. Ecrou selon l'une des revendications 1 à 8, caractérisé en ce que la jupe (7) présente une forme ronde.

11. Ecrou selon l'une des revendications 1 à 10, caractérisé en ce que les moyens pour l'encastrement sont constitués par la partie évasée rentrante (6) que présente le poinçon (4) sur toute sa partie extérieure, du fait de son évasement extérieur par rapport au trou (2).

12. Ecrou selon l'une des revendications 1 à 10, caractérisé en ce que les moyens pour l'encastrement sont constitués par une encoche circulaire (13) située à la base de poinçon (4).

13. Ecrou selon l'une des revendications 1 à 12 caractérisé en ce que la jupe (7) présente, sur sa face interne, une partie évasée rentrante formant un angle obtus avec l'axe (5) de l'écrou.

14. Vis destinée à être fixée par sertissage sur un support (12), ladite vis comportant un corps (18) et, en saillie sur ce corps, une tête (26) entourée d'un rebord en forme de jupe continue (19), de hauteur inférieure à celle de la tête (26) ainsi qu'une tige (16), ladite tête (26) présentant des moyens (20) pour l'encastrement d'une partie de la tôle (12) et définissant avec ladite jupe (19), une gorge (21) dont le fond (25) présente un relief en creux (22) qui permet de s'affranchir du respect de la tolérance sur la cote utile de sertissage.

15. Vis selon la revendication 14, caractérisée en ce que lesdits moyens pour l'encastrement sont constitués par une première partie rentrante (20) prévue au raccordement de la tête (23) et du corps (18).

16. Vis selon l'une des revendications 14 ou 15, caractérisée en ce que ladite jupe continue (19) présente une partie rentrante (23) faisant un angle obtus avec l'axe (17) de la vis.

17. Vis selon l'une des revendications 14 à 16 caractérisée en ce que la tige (16) est dans le prolongement de la tête (26).

18. Vis selon la revendication 17, caractérisée en ce que les moyens pour l'encastrement présentent une deuxième partie rentrante (24) dans le prolongement de la première (20).

19. Vis selon l'une des revendications 14 à 16 caractérisée en ce que la tige (16) est à l'opposé de la tête (26), par rapport audit corps (18).

20. Support contenant un écrou selon l'une des revendications 1 à 13 serti sur ledit support au moyen d'une machine appropriée, ledit relief en creux (10, 14) permettant de s'affranchir également de la tolérance sur l'épaisseur dudit support (12), la quantité de matière pénétrant dans ledit relief en creux (10, 14) dépendant des valeurs de la cote utile de sertissage de l'écrou et de l'épaisseur du support, pour un réglage prédéterminé de ladite machine.

21. Support contenant une vis selon l'une des revendications 14 à 19, sertie sur ledit support au moyen d'une machine appropriée, ledit relief en creux (22) permettant de s'affranchir également de la tolérance sur l'épaisseur dudit support (12).

## Patentansprüche

1. Selbstfassende, selbstlochende Mutter, die dazu bestimmt ist, durch Einpressung auf einer Stütze (12) befestigt zu werden, wobei diese Mutter aus einem Körper (1), durch den ein Loch (2) mit Gewinde oder, in das ein Gewinde geschnitten werden soll, gebohrt ist, und auf diesem Körper (1) vorspringend aus einem Perforationskopf (4) besteht, der einen Lochstempel bildet, umgeben von einem Rand in Form eines durchgehenden Mantels (7), dessen Höhe geringer als jene des Lochstempels ist, wobei nur die Höhentoleranzen (H1) dieses Mantels (7) und die Höhentoleranzen (H4) der eingesetzten Mutter eingehalten werden, wobei der Kopf (4) Mittel (6, 13) zum Versenken eines Teils der Stütze (12) aufweist und mit dem Mantel (7) eine Rille (8) definiert, deren Boden (9) ein Hohlrelief (10, 14) aufweist, das es ermöglicht, die Toleranz für das Nutzmaß der Einpressung nicht einhalten zu müssen,

2. Mutter nach Anspruch 1, dadurch gekennzeichnet, daß dieses Relief die Form einer Zahnung (14) aufweist.

3. Mutter nach Anspruch 2, dadurch gekennzeichnet, daß diese Zahnung (14) eine Epizykloide bildet, die der Lösung der Einpressung während der Drehung der Mutter entgegenwirkt.

4. Mutter nach Anspruch 1, dadurch gekennzeichnet, daß dieses Relief von regelmäßig verteilten Hohlräumen (10) gebildet ist.

5. Mutter nach Anspruch 1, dadurch gekennzeichnet, daß dieses Relief von einer durchgehenden kreisförmigen Rille (27) gebildet ist.

6. Mutter nach Anspruch 5, dadurch gekennzeichnet, daß die kreisförmige Rille (28) in bezug auf die Achse (5) der Mutter exzentrisch angeordnet ist.

7. Mutter nach den Ansprüchen 5 oder 6, dadurch gekennzeichnet, daß die kreisförmige Rille (29) einen veränderbaren Querschnitt aufweist.

8. Mutter nach einem der Ansprüche 1 bis 7, dadurch gekennzeichnet, daß der Kopf (4) rund ist.

9. Mutter nach einem der Ansprüche 1 bis 8, dadurch gekennzeichnet, daß der Mantel (7) eine polygonale Form aufweist.

10. Mutter nach einem der Ansprüche 1 bis 8, dadurch gekennzeichnet, daß der Mantel (7) eine runde Form aufweist.

11. Mutter nach einem der Ansprüche 1 bis 10, dadurch gekennzeichnet, daß die Mittel zum Versenken von dem konisch erweiterten einspringenden Teil (6) gebildet sind, den der Lochstempel (4) auf seinem gesamten äußeren Teil aufgrund seiner äußeren trichterförmigen Erweiterung in bezug auf das Loch (2) aufweist.

12. Mutter nach einem der Ansprüche 1 bis 10, dadurch gekennzeichnet, daß die Mittel zum Versenken von einer kreisförmigen Kerbe (13) gebildet sind, die sich an der Basis des Lochstempels (4) befindet.

13. Mutter nach einem der Ansprüche 1 bis 12, dadurch gekennzeichnet, daß der Mantel (7) auf seiner Innenfläche einen konisch erweiterten einspringenden Teil aufweist, der mit der Achse (5) der Mutter einen stumpfen Winkel bildet.

14. Schraube, die dazu bestimmt ist, durch Einpressung auf einer Stütze (12) befestigt zu werden, wobei diese Schraube aus einem Körper (18) und auf diesem Körper vorspringend einem Kopf (26), der von einem Rand in Form eines durchgehenden Mantels (19), dessen Höhe geringer als jene des Kopfes (26) ist, umgeben ist, und einer Stange (16) besteht, wobei dieser Kopf (26) Mittel (20) zum Versenken eines Teils des Bleches (12) aufweist und mit dem Mantel (19) eine Rille (21) definiert, deren Boden (25) ein Hohlrelief (22) aufweist, das es ermöglicht, die Toleranz für das Nutzmaß der Einpressung nicht einhalten zu müssen.

15. Schraube nach Anspruch 14, dadurch gekennzeichnet, daß die Mittel zum Versenken von einem ersten einspringenden Teil (20) gebildet sind, der an der Verbindungsstelle zwischen dem Kopf (23) und dem Körper (18) vorgesehen ist.

16. Schraube nach einem der Ansprüche 14 oder 15, dadurch gekennzeichnet, daß dieser durchgehende Mantel (19) einen einspringenden Teil (23) aufweist, der mit der Achse (17) der Schraube einen stumpfen Winkel bildet.

17. Schraube nach einem der Ansprüche 14 bis 16, dadurch gekennzeichnet, daß sich die Stange (16) in der Verlängerung des Kopfes (26) befindet.

18. Schraube nach Anspruch 17, dadurch gekennzeichnet, daß die Mittel zum Versenken einen zweiten einspringenden Teil (24) in der Verlängerung des ersten (20) aufweisen.

19. Schraube nach einem der Ansprüche 14 bis 16, dadurch gekennzeichnet, daß sich die Stange (16) gegenüber des Kopfes (26) in bezug auf den Körper (18) befindet.

20. Stütze, die eine Mutter nach einem der Ansprüche 1 bis 13 umfaßt, die in diese Stütze mittels einer geeigneten Maschine eingesetzt ist, wobei es das Hohlrelief (10, 14) ermöglicht, auch die Dickentoleranz der Stütze (12) nicht beachten zu müssen, da die Materialmenge, die in das Hohlrelief (10, 14) eindringt, von den Werten des Nutzmaßes für die Einpressung der Mutter und von der Dicke der Stütze bei einer vordefinierten Einstellung der Maschine abhängt.

21. Stütze, die eine Schraube nach einem der Ansprüche 14 bis 19 umfaßt, die in diese Stütze mittels einer geeigneten Maschine eingesetzt ist, wobei es das Hohlrelief (22) ermöglicht, auch die Dickentoleranz der Stütze (12) nicht beachten zu müssen.

## Claims

1. A self-crimping and self-piercing nut designed to be tacked and fastened onto a support (12), whereby the said nut is composed of a body (1) into which a hole (2) has been drilled, tapped or designed to be tapped and, cantilever on this body (1), a drilling head (4) forming a punch, surrounded by a rim in the shape of a continuous skirting (7) and whose height is less than that of the punch, whereas only the tolerance of the height (H1) of the said skirting (7) and the tolerance of the height (H4) of the nut then set ought to be complied with, whereby the head (4) exhibits means (6, 13) for the embedding of a portion of the support (12) and defines with the said skirting (7) a groove (8) whose bottom (9) shows a hollow emboss (10, 14) which enables departing from the tolerance regarding the useful crimping size.

2. A nut according to claim 1, characterised in that the said emboss has the form of a toothing (14).

3. A nut according to claim 2, characterised in that the said toothing (14) forms an epicycloid opposing the rotary uncrimping of the nut.

4. A nut according to claim 1, characterised in that the said emboss is composed of cavities (10) distributed evenly.

5. A nut according to claim 1, characterised in that the said emboss is composed by a continuous circular groove (27).

6. A nut according to claim 5, characterised in that the circular groove (28) is offset with respect to the axis (5) of the nut.

7. A nut according to claims 5 or 6 characterised in that the circular groove (29) is of a variable section.

8. A nut according to any of the claims 1 to 7, characterised in that the said head (4) is round.

9. A nut according to one of the claims 1 to 8, characterised in that the said skirting (7) exhibits a polygonal shape.

10. A nut according to one of the claims 1 to 8, characterised in that the skirting (7) exhibits a round shape.

11. A nut according to one of the claims 1 to 10, characterised in that the means for embedding are constituted of the inward flared section (6) shown by the punch (4) over its whole external part, further to its being flared externally with respect to the hole (2).

12. A nut according to one of the claims 1 to 10, characterised in that the means for embedding are constituted by a circular notch (13) situated at the base of the punch (4).

13. A nut according to one of the claims 1 to 12, characterised in that the skirting (7) exhibits, on its internal face, an inward flared section forming an obtuse angle with the axis (5) of the nut.

14. A screw designed for fastening by crimping onto a support (12), whereby the said screw comprises a body (18) and, cantilever on this body, a head (26) surrounded by a rim in the shape of a continuous skirting (19), whose height is less than that of the head (26) as well as a rod (16), whereby the said head (26) exhibits means (20) for the embedding of a portion of the support (12) and defines with the said skirting (19), a groove (21) whose bottom (25) shows a hollow emboss (22) which enables departing from the tolerance regarding the useful crimping size.

15. A screw according to claim 14, characterised in that the said embedding means are constituted of a first inward section (20) provided for at the connection of the head (23) and of the body (18).

16. A screw according to one of the claims 14 and 15, characterised in that the said continuous skirting (19) exhibits an inward section (23) forming an obtuse angle with the axis (17) of the screw.

17. A screw according to one of the claims 14 to 16 characterised in that the rod (16) is in the alignment of the head (26).

18. A screw according to claim 17, characterised in that the embedding means exhibit a second inward section (24) in the alignment of the first (20).

19. A screw according to one of the claims 14 to 16 characterised in that the rod (16) is opposite to the head (26), with respect to the said body (18).

20. A support containing a nut according to one of the claims 1 to 13 crimped on the said support using an appropriate machine, whereby the said hollow emboss (10, 14) also enables to depart from the thickness tolerance of the said support (12), whereby the quantity of material penetrating into the said hollow emboss (10, 14) depends on the values of the useful crimping size of the nut and on the thickness of the support, for predetermined adjustment of the said machine.

21. A support containing a screw according to one of the claims 14 to 19, crimped onto the said support using an appropriate machine, whereby the said hollow emboss (22) also enables to depart from the tolerance regarding the thickness of the said support (12).
